# EUROPEAN PATENT APPLICATION

(11) **EP 2 615 862 A1**
(43) Date of publication of application: **17.07.2013**
(21) Application number: 13150436.7
(22) Date of filing: 07.01.2013
(51) Int. Cl.: H04W 16/18

(54) **System for automatic object classification and tagging in an RF planning tool**

(30) Priority: 12.01.2012 US 201213348759
(71) Applicant: Honeywell International Inc., Morristown, NJ 07962-2245 (US)
(72) Inventor: Mahasenan, Arun V., Morristown, NJ 07962-2245 (US); Kamalakannan, Arunkumar, Morristown, NJ 07962-2245 (US)
(74) Representative: Houghton, Mark Phillip

(57) **Abstract**

A system and method store a map of an area in a computer storage device. The map includes objects in the area. Objects on the map and locations of the objects on the map are identified, and properties are associated to the identified objects. The identified objects, the locations of the identified objects, and the properties of the identified objects are provided to a radio frequency (RF) planning tool such that the RF planning tool can determine RF wave propagation and RF wave attenuation as a function of the identified objects, the locations of the identified objects, and the properties of the identified objects.

## Description

### Technical Field

The present disclosure relates to a system for automatic object classification and tagging in an RF planning tool.

### Background

A typical wireless network includes several sensors and one or more controllers. A radio frequency (RF) planning tool can be used to assist in the planning and design of such a wireless network. In the situation wherein it is desired to install a wireless network at a typical industrial site, such as a petroleum tank farm, such an industrial site may have multiple objects of similar characteristics (*e.g.*, tank farms have clusters of tanks, wooden walls, pipes, and other structures). Consequently, before RF planning, the designer has to identify and place all the objects in the image and place the objects at appropriate locations in the site. However, identifying objects in the site map (*e.g*., an image, CAD drawing, BIM, *etc*.) may be a time consuming process for the designer. Moreover, after identifying the objects, the designer needs to key in the attributes of the objects. This keying in process, once again, is time consuming, and increases the cost and time of an RF wireless network estimation. Furthermore, manual operations may introduce errors in the location of the objects as well the size of the objects.

### Brief Description of the Drawings

**FIG. 1** is a block diagram of a process to automate the identification and classification of objects in an area for use in connection with a tool to plan and design wireless radio frequency (RF) networks.

**FIGS. 2A** and **2B** are another block diagram of a process to automate the identification and classification of objects in an area for use in connection with a tool to plan and design wireless radio frequency (RF) networks.

**FIG. 3** is a diagram of an industrial site.

**FIG. 4** is a diagram of the industrial site of **FIG. 3** after the objects at the industrial site have been automatically identified and tagged.

**FIG. 5** is another block diagram of a process to automate the identification and classification of objects in an area for use in connection with a tool to plan and design wireless radio frequency (RF) networks

**FIG. 6** is a block diagram of a computer system upon which an embodiment of the present disclosure can execute.

### Detailed Description

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, electrical, and optical changes may be made without departing from the scope of the present invention. The following description of example embodiments is, therefore, not to be taken in a limited sense, and the scope of the present invention is defined by the appended claims.

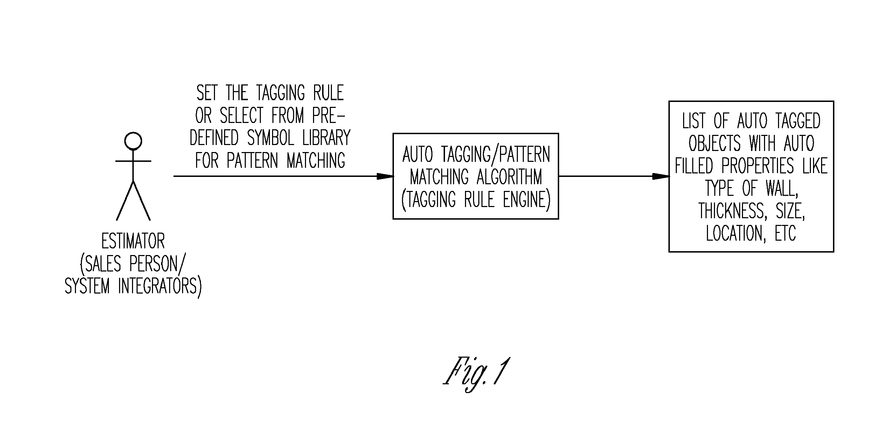

One or more embodiments relate to the use of an auto-tagging scheme in connection with the use of an RF planning tool. Specifically, auto object identification identifies the objects in the site using pattern recognition, and classifies the objects into various known classes based on a prior set of collected data. Once similar objects are identified in the site, they can be associated to a class of materials. Furthermore, once the tool is trained, the tagged objects can be directly identified without any user intervention. The user can also train the pattern recognition algorithm by giving the shape and/or color of the object as a class. The tool can also use a previously trained set of sequences, such as can be found in an Internet-based map (*e.g.*, Google maps). Additionally, products such as Google Earth can tag and can landmark various structures, and this information can be used for auto identification of objects for RF planning. Similarly, some data formats like CAD and BIM include site specific details, which can be used directly in an RF planning tool without having to do any auto detection. Irrespective of the origin of the data, based on the base line shape/color combination, the tool can automatically identify and locate the objects in the site. This process automates the site specific material placement in the tool and can simplify the RF pre-planning process. A high level block diagram of the process is illustrated in **FIG. 1****.**

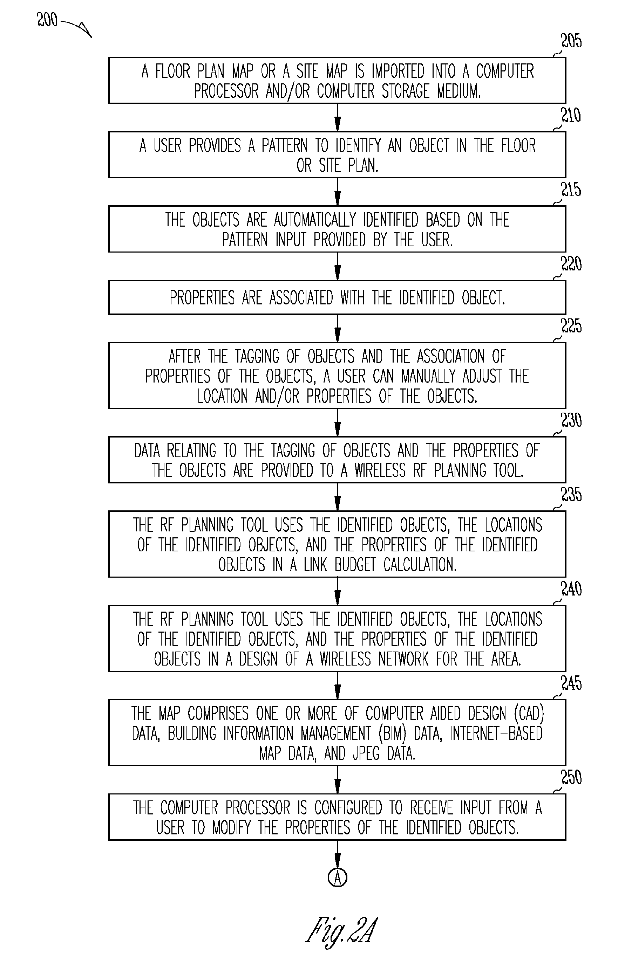

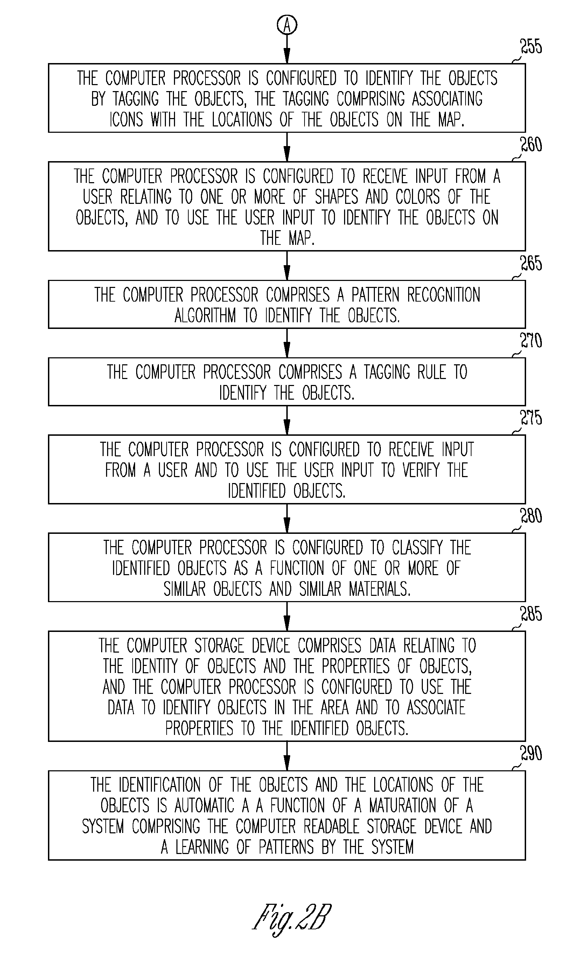

A more detailed explanation of this process **200** is illustrated in **FIGS. 2A** and **2B****.** **FIGS. 2A** and **2B** include a number of process blocks **205 - 285.** Though arranged serially in the example of **FIGS. 2A** and **2B****,** other examples may reorder the blocks, omit one or more blocks, and/or execute two or more blocks in parallel using multiple processors or a single processor organized as two or more virtual machines or sub-processors. Moreover, still other examples can implement the blocks as one or more specific interconnected hardware or integrated circuit modules with related control and data signals communicated between and through the modules. Thus, any process flow is applicable to software, firmware, hardware, and hybrid implementations.

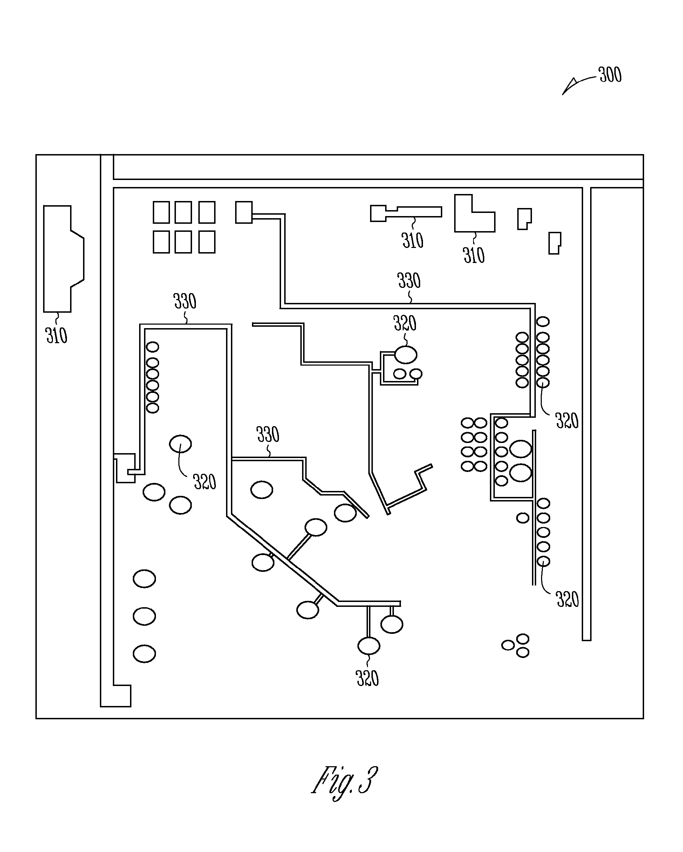

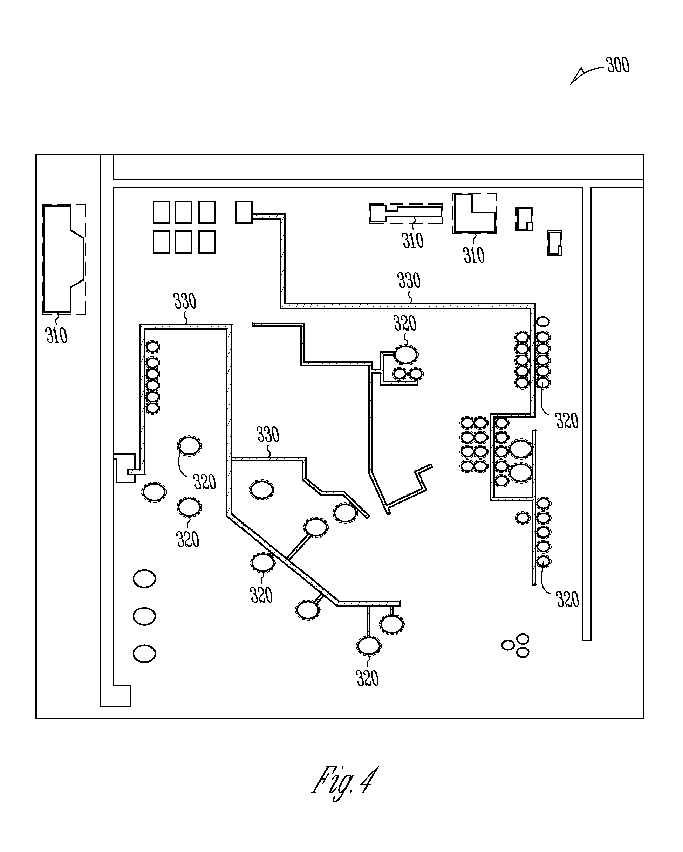

Referring to **FIGS. 2A** and **2B****,** at **205** a floor plan map or a site map is imported into a computer processor and/or computer storage medium. This map can be a computer aided design (CAD) image, a building information model (BIM) image, or an image in some other format. An example of such a site plan for an industrial petroleum tank site is illustrated in **FIG. 3. FIG. 3** illustrates a tank farm **300,** which includes buildings **310,** tanks **320,** and pipelines **330.** At **210,** a user provides a pattern to identify an object in the floor or site plan. This pattern can be from a pattern library, it can be from an Internet-based map, or it can be from CAD or BIM data. The pattern can also be a small image segment provided by the user. At **215,** the process **200** automatically identifies the objects based on the pattern input by the user. Alternatively, a tagging rule can be applied to the floor or site plan to identify the objects in the site plan. **FIG. 4** illustrates the tagging of the identified objects with icons. The tagging in **FIG. 4** is illustrated by dashed lines around buildings **310,** dashed lines around tanks **320,** and diagonal lines within the pipelines **330.** At **220,** the process **200** associates properties with the identified object. The properties of an object, such as a thickness and material of a wall of a building or a size and material of a pipeline, can be stored in a database. At **225,** after the tagging of objects and the association of properties of the objects, a user can manually adjust the location and/or properties of the objects. At **230,** data relating to the tagging of objects and the properties of the objects are provided to a wireless RF planning tool. The planning tool can then use this data in its planning and design of a wireless network for the floor plan or site plan. Specifically, the planning tool can determine the placement of sensors and transmitters based on wave propagation and wave attenuation caused by the objects in the floor or site plan.

At **235,** the RF planning tool uses the identified objects, the locations of the identified objects, and the properties of the identified objects in a link budget calculation, and at **240,** the RF planning tool uses the identified objects, the locations of the identified objects, and the properties of the identified objects in a design of a wireless network for the area. At **245,** the map comprises one or more of computer aided design (CAD) data, building information model (BIM) data, Internet-based map data, and jpeg data. At **250,** the computer processor is configured to receive input from a user to modify the properties of the identified objects. At **255,** the computer processor is configured to identify the objects by tagging the objects, the tagging comprising associating icons with the locations of the objects on the map. At **260,** the computer processor is configured to receive input from a user relating to one or more of shapes and colors of the objects, and to use the user input to identify the objects on the map. The user input comprises one or more of an Internet-based map, a computer aided design (CAD) format with site specific details, and a building information model (BIM) format with site specific details. At **265,** the computer processor comprises a pattern recognition algorithm to identify the objects. At **270,** the computer processor comprises a tagging rule to identify the objects. At **275,** the computer processor is configured to receive input from a user and to use the user input to verify the identified objects. The user input can include one or more of an Internet-based map, a computer aided design (CAD) format with site specific details, and a building information model (BIM) format with site specific details. At **280,** the computer processor is configured to classify the identified objects as a function of one or more of similar objects and similar materials. At **285,** the computer storage device comprises data relating to the identity of objects and the properties of objects, and the computer processor is configured to use the data to identify objects in the area and to associate properties to the identified objects. At **290,** the identification of the objects and the locations of the objects is automatic as a function of a maturation of a system that includes the computer readable storage device and a learning of patterns by the system.

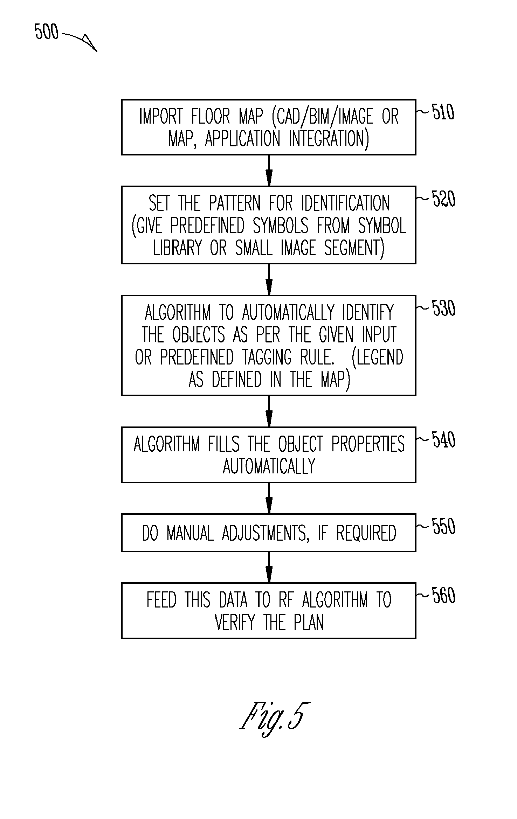

**FIG. 5** illustrates another embodiment of a process to automate the identification and classification of objects in an area for use in connection with a tool to plan and design wireless radio frequency (RF) networks. At **510,** a floor map is imported into a computer processor. The floor map can be either a CAD image or a BIM image. At **520,** a pattern is set that is used to identify structures and objects in the floor map. Predefined symbols can be obtained from a symbol library, and/or a small image segment can be provided by a user. This could also be a legend used in the drawing, *e.g.*, color codes or patterns to represent objects and definitions. At **530,** objects are automatically identified per the given input in step **520,** or via a predefined tagging rule. At **540,** properties for the identified objects are automatically filed. At **550,** manual adjustments are made to the identified objects if needed. At **560,** the data is fed to an RF algorithm in order to verify the plan.

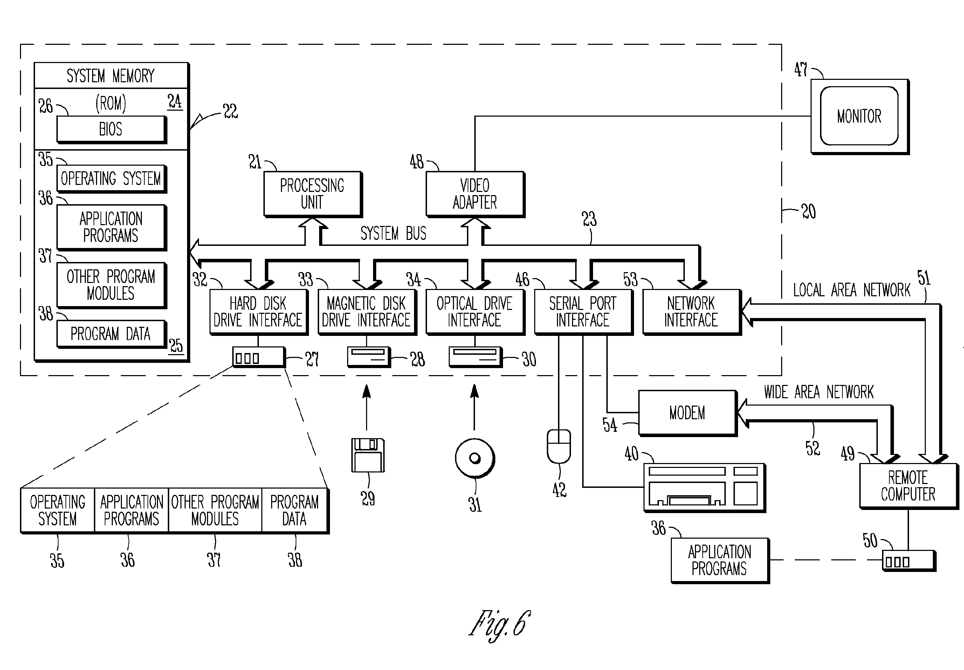

**FIG. 6** is an overview diagram of a hardware and operating environment in conjunction with which embodiments of the invention may be practiced. The description of **FIG. 6** is intended to provide a brief, general description of suitable computer hardware and a suitable computing environment in conjunction with which the invention may be implemented. In some embodiments, the invention is described in the general context of computer-executable instructions, such as program modules, being executed by a computer, such as a personal computer. Generally, program modules include routines, programs, objects, components, data structures, etc., that perform particular tasks or implement particular abstract data types.

Moreover, those skilled in the art will appreciate that the invention may be practiced with other computer system configurations, including hand-held devices, multiprocessor systems, microprocessor-based or programmable consumer electronics, network PCS, minicomputers, mainframe computers, and the like. The invention may also be practiced in distributed computer environments where tasks are performed by I/ 0 remote processing devices that are linked through a communications network. In a distributed computing environment, program modules may be located in both local and remote memory storage devices.

In the embodiment shown in **FIG. 6****,** a hardware and operating environment is provided that is applicable to any of the servers and/or remote clients shown in the other Figures.

As shown in **FIG. 6****,** one embodiment of the hardware and operating environment includes a general purpose computing device in the form of a computer **20** (*e.g.*, a personal computer, workstation, or server), including one or more processing units **21,** a system memory **22,** and a system bus **23** that operatively couples various system components including the system memory **22** to the processing unit **21.** There may be only one or there may be more than one processing unit **21,** such that the processor of computer **20** comprises a single central-processing unit (CPU), or a plurality of processing units, commonly referred to as a multiprocessor or parallel-processor environment. A multiprocessor system can include cloud computing environments. In various embodiments, computer **20** is a conventional computer, a distributed computer, or any other type of computer.

The system bus **23** can be any of several types of bus structures including a memory bus or memory controller, a peripheral bus, and a local bus using any of a variety of bus architectures. The system memory can also be referred to as simply the memory, and, in some embodiments, includes read-only memory (ROM) **24** and random-access memory (RAM) **25.** A basic input/output system (BIOS) program **26,** containing the basic routines that help to transfer information between elements within the computer **20,** such as during start-up, may be stored in ROM **24.** The computer **20** further includes a hard disk drive **27** for reading from and writing to a hard disk, not shown, a magnetic disk drive **28** for reading from or writing to a removable magnetic disk **29,** and an optical disk drive **30** for reading from or writing to a removable optical disk **31** such as a CD ROM or other optical media.

The hard disk drive **27,** magnetic disk drive **28,** and optical disk drive **30** couple with a hard disk drive interface **32,** a magnetic disk drive interface **33,** and an optical disk drive interface **34,** respectively. The drives and their associated computer-readable media provide non volatile storage of computer-readable instructions, data structures, program modules and other data for the computer **20.** It should be appreciated by those skilled in the art that any type of computer-readable media which can store data that is accessible by a computer, such as magnetic cassettes, flash memory cards, digital video disks, Bernoulli cartridges, random access memories (RAMs), read only memories (ROMs), redundant arrays of independent disks (*e.g.*, RAID storage devices) and the like, can be used in the exemplary operating environment.

A plurality of program modules can be stored on the hard disk, magnetic disk **29,** optical disk **31,** ROM **24,** or RAM **25,** including an operating system **35,** one or more application programs **36,** other program modules **37,** and program data **38.** A plug in containing a security transmission engine for the present invention can be resident on any one or number of these computer-readable media.

A user may enter commands and information into computer **20** through input devices such as a keyboard **40** and pointing device **42.** Other input devices (not shown) can include a microphone, joystick, game pad, satellite dish, scanner, or the like. These other input devices are often connected to the processing unit **21** through a serial port interface **46** that is coupled to the system bus **23,** but can be connected by other interfaces, such as a parallel port, game port, or a universal serial bus (USB). A monitor **47** or other type of display device can also be connected to the system bus **23** via an interface, such as a video adapter **48.** The monitor **40** can display a graphical user interface for the user. In addition to the monitor **40,** computers typically include other peripheral output devices (not shown), such as speakers and printers.

The computer **20** may operate in a networked environment using logical connections to one or more remote computers or servers, such as remote computer **49.** These logical connections are achieved by a communication device coupled to or a part of the computer **20;** the invention is not limited to a particular type of communications device. The remote computer **49** can be another computer, a server, a router, a network PC, a client, a peer device or other common network node, and typically includes many or all of the elements described above I/0 relative to the computer **20,** although only a memory storage device **50** has been illustrated. The logical connections depicted in **FIG. 6** include a local area network (LAN) **51** and/or a wide area network (WAN) **52.** Such networking environments are commonplace in office networks, enterprise-wide computer networks, intranets and the internet, which are all types of networks.

When used in a LAN-networking environment, the computer **20** is connected to the LAN **51** through a network interface or adapter **53,** which is one type of communications device. In some embodiments, when used in a WAN-networking environment, the computer **20** typically includes a modem **54** (another type of communications device) or any other type of communications device, *e.g.*, a wireless transceiver, for establishing communications over the wide-area network **52,** such as the internet. The modem **54,** which may be internal or external, is connected to the system bus 23 via the serial port interface **46.** In a networked environment, program modules depicted relative to the computer **20** can be stored in the remote memory storage device **50** of remote computer, or server **49.** It is appreciated that the network connections shown are exemplary and other means of, and communications devices for, establishing a communications link between the computers may be used including hybrid fiber-coax connections, T1-T3 lines, DSL's, OC-3 and/or OC-12, TCP/IP, microwave, wireless application protocol, and any other electronic media through any suitable switches, routers, outlets and power lines, as the same are known and understood by one of ordinary skill in the art.

### Example Embodiments

Several embodiments and sub-embodiments have been disclosed above, and it is envisioned that any embodiment can be combined with any other embodiment or sub-embodiment. Specific examples of such combinations are illustrated in the examples below.

Example No. 1 is a system including one or more of a computer processor and a computer storage device configured to store a map of an area, the map comprising objects in the area; identify objects on the map and locations of the objects on the map; associate properties to the identified objects; and provide the identified objects, the locations of the identified objects, and the properties of the identified objects to a radio frequency (RF) planning tool such that the RF planning tool can determine RF wave propagation and RF wave attenuation as a function of the identified objects, the locations of the identified objects, and the properties of the identified objects.

Example No. 2 includes all the features of Example No. 1, and optionally includes a system wherein the RF planning tool uses the identified objects, the locations of the identified objects, and the properties of the identified objects in a link budget calculation.

Example No. 3 includes all the features of Example Nos. 1-2, and optionally includes a system wherein the RF planning tool uses the identified objects, the locations of the identified objects, and the properties of the identified objects in a design of a wireless network for the area.

Example No. 4 includes all the features of Example Nos. 1-3, and optionally includes a system wherein the map comprises one or more of computer aided design (CAD) data, building information model (BIM) data, Internet-based map data, and jpeg data.

Example No. 5 includes all the features of Example Nos. 1-4, and optionally includes a system wherein the computer processor is configured to receive input from a user to modify the properties of the identified objects.

Example No. 6 includes all the features of Example Nos. 1-5, and optionally includes a system wherein the computer processor is configured to identify the objects by tagging the objects, the tagging comprising associating icons with the locations of the objects on the map and a size or area of the identified objects.

Example No. 7 includes all the features of Example Nos. 1-6, and optionally includes a system wherein the computer processor is configured to receive input from a user relating to one or more of shapes, colors, and patterns of the objects, and to use the user input to identify the objects on the map.

Example No. 8 includes all the features of Example Nos. 1-7, and optionally includes a system wherein the user input comprises one or more of an Internet-based map, a computer aided design (CAD) format with site specific details, and a building information model (BIM) format with site specific details.

Example No. 9 includes all the features of Example Nos. 1-8, and optionally includes a system wherein the computer processor comprises a pattern recognition algorithm to identify the objects.

Example No. 10 includes all the features of Example Nos. 1-9, and optionally includes a system wherein the computer processor comprises a tagging rule to identify the objects.

Example No. 11 includes all the features of Example Nos. 1-10, and optionally includes a system wherein the computer processor is configured to receive input from a user and to use the user input to verify the identified objects.

Example No. 12 includes all the features of Example Nos. 1-11, and optionally includes a system wherein the user input comprises one or more of an Internet-based map, a computer aided design (CAD) format with site specific details, and a building information model (BIM) format with site specific details.

Example No. 13 includes all the features of Example Nos. 1-12, and optionally includes a system wherein the computer processor is configured to classify the identified objects as a function of one or more of similar objects and similar materials.

Example No. 14 includes all the features of Example Nos. 1-13, and optionally includes a system wherein the computer storage device comprises data relating to the identity of objects and the properties of objects, and the computer processor is configured to use the data to identify objects in the area and to associate properties to the identified objects.

Example No. 15 is a process including storing a map of an area in one or more of a computer processor and a computer storage device, the map comprising objects in the area; identifying objects on the map and locations of the objects on the map; associating properties to the identified objects; and providing the identified objects, the locations of the identified objects, and the properties of the identified objects to a radio frequency (RF) planning tool such that the RF planning tool can determine RF wave propagation and RF wave attenuation as a function of the identified objects, the locations of the identified objects, and the properties of the identified objects.

Example No. 16 includes all the features of Example No. 15, and optionally includes a process wherein the RF planning tool uses the identified objects, the locations of the identified objects, and the properties of the identified objects in one or more of a link budget calculation, a design of a wireless network, an RF wave propagation modeling of the wireless network, and an estimation of a link quality between nodes in the wireless network.

Example No. 17 includes all the features of Example Nos. 15-16, and optionally includes a process wherein the computer processor is configured to receive input from a user relating to one or more of shapes, colors, patterns, and attributes of the objects, and to use the user input to identify the objects on the map; and wherein the user input comprises one or more of an Internet-based map, a computer aided design (CAD) format with site specific details, and a building information model (BIM) format with site specific details.

Example No. 18 includes all the features of Example Nos. 15-17, and optionally includes a process wherein the computer processor is configured to receive input from a user and to use the user input to verify the identified objects; and wherein the user input comprises one or more of an Internet-based map, a computer aided design (CAD) format with site specific details, and a building information model (BIM) format with site specific details.

Example No. 19 is a computer readable storage device comprising instructions that when executed by a processor execute a process comprising storing a map of an area in one or more of a computer processor and a computer storage device, the map comprising objects in the area; identifying objects on the map and locations of the objects on the map; associating properties to the identified objects; and providing the identified objects, the locations of the identified objects, and the properties of the identified objects to a radio frequency (RF) planning tool such that the RF planning tool can determine RF wave propagation and RF wave attenuation as a function of the identified objects, the locations of the identified objects, and the properties of the identified objects.

Example No. 20 includes all the features of Example No. 19, and optionally includes a computer readable storage device wherein the identifying of the objects and the locations of the objects is automatic as a function of a maturation of a system comprising the computer readable storage device and a learning of patterns by the system.

It should be understood that there exist implementations of other variations and modifications of the invention and its various aspects, as may be readily apparent, for example, to those of ordinary skill in the art, and that the invention is not limited by specific embodiments described herein. Features and embodiments described above may be combined with each other in different combinations. It is therefore contemplated to cover any and all modifications, variations, combinations or equivalents that fall within the scope of the present invention.

The Abstract is provided to comply with 37 C.F.R. §1.72(b) and will allow the reader to quickly ascertain the nature and gist of the technical disclosure. It is submitted with the understanding that it will not be used to interpret or limit the scope or meaning of the claims.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus the following claims are hereby incorporated into the Description of the Embodiments, with each claim standing on its own as a separate example embodiment.

## Claims

1. A system comprising:
one or more of a computer processor (21) and a computer storage device (22) configured to:
store a map (300) of an area (205), the map comprising objects (310, 320, 330) in the area;
identify objects on the map and locations of the objects on the map; (210) associate properties to the identified objects; (220) and
provide the identified objects, the locations of the identified objects, and the properties of the identified objects to a radio frequency (RF) planning tool such that the RF planning tool can determine RF wave propagation and RF wave attenuation as a function of the identified objects, the locations of the identified objects, and the properties of the identified objects. (230)

2. The system of claim 1, wherein the RF planning tool uses the identified objects, the locations of the identified objects, and the properties of the identified objects in a link budget calculation. (235)

3. The system of claim 1, wherein the RF planning tool uses the identified objects, the locations of the identified objects, and the properties of the identified objects in a design of a wireless network for the area. (240)

4. The system of claim 1, wherein the computer processor is configured to identify the objects by tagging the objects, the tagging comprising associating icons with the locations of the objects on the map and a size or area of the identified objects. (255)

5. The system of claim 1, wherein the computer processor is configured to receive input from a user and to use the user input to verify the identified objects; (275) and wherein the user input comprises one or more of an Internet-based map, a computer aided design (CAD) format with site specific details, and a building information model (BIM) format with site specific details. (245)

6. The system of claim 1, wherein the computer processor is configured to classify the identified objects as a function of one or more of similar objects and similar materials. (280)

7. The system of claim 1, wherein the computer storage device comprises data relating to the identity of objects and the properties of objects, and the computer processor is configured to use the data to identify objects in the area and to associate properties to the identified objects. (285)

8. A process comprising:
storing a map (300) of an area (205) in one or more of a computer processor (21) and a computer storage device (22), the map comprising objects (310, 320, 330) in the area;
identifying objects on the map and locations of the objects on the map; (210)
associating properties to the identified objects; (220) and
providing the identified objects, the locations of the identified objects, and the properties of the identified objects to a radio frequency (RF) planning tool such that the RF planning tool can determine RF wave propagation and RF wave attenuation as a function of the identified objects, the locations of the identified objects, and the properties of the identified objects. (230)

9. The process of claim 8, wherein the RF planning tool uses the identified objects, the locations of the identified objects, and the properties of the identified objects in one or more of a link budget calculation, a design of a wireless network, an RF wave propagation modeling of the wireless network, and an estimation of a link quality between nodes in the wireless network. (235, 240)

10. A computer readable storage device comprising instructions that when executed by a processor execute a process comprising:
storing a map (300) of an area (205) in one or more of a computer processor (21) and a computer storage device (22), the map comprising objects (310, 320, 330) in the area;
identifying objects on the map and locations of the objects on the map; (210) associating properties to the identified objects; (220) and
providing the identified objects, the locations of the identified objects, and the properties of the identified objects to a radio frequency (RF) planning tool such that the RF planning tool can determine RF wave propagation and RF wave attenuation as a function of the identified objects, the locations of the identified objects, and the properties of the identified objects.(230)
